# EUROPEAN PATENT SPECIFICATION

(11) **EP 3 434 615 B1**
(45) Date of publication and mention of the grant of the patent: **25.11.2020**
(21) Application number: 17001293.4
(22) Date of filing: 26.07.2017
(51) Int. Cl.: B65D 51/18, B65D 1/26, B65D 1/30, B29C 51/10, B29C 51/16, B29C 51/26, B65D 1/46, B65D 77/20, B65D 85/72, B29C 51/34, B65D 23/08, B65D 21/02, B29C 33/00, B29C 33/44, B29C 33/48, B29L 31/00

(54) **SYSTEM FOR MANUFACTURING PAIRS OF CONTAINERS AND PAIR OF CONTAINERS**
SYSTEM ZUR HERSTELLUNG VON PAAREN VON BEHÄLTERN UND PAAR VON BEHÄLTERN
SYSTÈME DE FABRICATION DE PAIRES DE RÉCIPIENTS ET PAIRE DE RÉCIPIENT

(43) Date of publication of application: 30.01.2019
(73) Proprietor: Industrias Tecnológicas de Mecanización y Automatizaciòn, S.A., 08960 Sant Just Desvern (Barcelona) (ES)
(72) Inventor: Ollé, Román, 08960 Sant Just Desvern (Barcelona) (ES); González, Manuel, 08960 Sant Just Desvern (Barcelona) (ES)
(74) Representative: Maldonado Jordan, Julia

(56) References cited:
- EP-A1- 1 486 424
- WO-A2-2004/106162
- CN-A- 1 062 702
- GB-A- 1 205 694
- US-A- 2 962 758
- US-B1- 6 523 686

## Description

### Object of the invention

The object of the invention is a system for manufacturing pairs of containers and a pair of containers.

The vessel has characteristics that allow, on the one hand, preventing wastage of the plastic paper and the film of the lid, consequently reducing manufacturing costs and, on the other hand, using a rectangular banner, cut with circular blades, like any standard banner insertion device.

### Field of application of the invention

This invention can be applied in the sector for packaging food products more specifically dairy products, such as yogurt or the like.

### State of the art

The plastic containers for food products that are currently known comprise a vessel intended to contain the product to be packaged, a closing lid made of plastic material with a film and a decorative perimeter banner.

Among this type of containers those that are known have a vessel with a frustoconical upper portion of increasing cross section in downward direction that extends in a rounded lower portion defining the cross section or maximum diameter of the container.

Containers with this type of vessels have a number of manufacturing drawbacks among which it is worth mentioning that they require the use of a die or tool for cutting the banner with a banana-shaped or circular ring sector to that it can adapt to the frustoconical configuration of the upper portion, and an additional difficulty consists in transferring said banner to an insertion device for placing it in the shaping mold of the container.

This therefore requires the use of specific packaging systems for this type of vessels.

An additional problem is that the systems used for the manufacture of this type of containers require, for the demolding of the vessels, a mold opening greater than the distance between two formed vessels, whereby said vessels can only be manufactured in rows of a single vessel, generating a large amount of waste in plastic and the material being used for the lid between two parallel rows.

Systems currently used for the manufacture of these containers operate with very complicated and rigid mechanisms that can only work a single packaging model and that generate a waste of 25% to 30% of material, namely plastic, banner paper and the sheet of the lid.

Current systems either place a banana-type banner, the process of which is expensive and complicated, or decorate the vessel by means of a "sleever" (a system that places a plastic sheath at the station subsequent to forming the container).

Current systems, provided with a working mold can only work with their own mold, since when a remnant of 30% occurs (festoon) in the trimming of the material that remains between the rows of containers, it conditions the rest of the FFS machine to work at a different to standard pace. It therefore forces the machine to work exclusively with that product.

Therefore the technical problem that arises consists in the development of a plastic container that allows solving the exposed problem in a satisfactory way and a system for the manufacture thereof that enables significantly reducing the material used, working with standard placement devices for placing the standard banner, and with standard non-working molds, with different sizes and without wasting the material that makes up the lids

Document US 2962758 A discloses a system for manufacturing pairs of containers, each pair of containers comprising a pair of adjacent vessels made of plastic material, each vessel comprising a cylindrical portion with a conical cross section having a maximum first diameter, a cylindrical lower portion having a maximum second diameter equal to the first diameter, and an annular surface defined around a mouth at the top of the cylindrical upper portion, the system comprising a mold for shaping pairs of adjacent vessels in an area for forming vessels inside the mold. Furthermore, it also discloses a pair of containers or vessels with a laminar lid, each vessel being made of plastic material intended to contain a product to be packaged, the laminar lid being fastened to an annular surface defined around a mouth of each vessel, wherein the vessel comprises a cylindrical lower portion with a constant cross section having a first diameter, and a conical upper portion having a maximum second diameter equal to the first diameter of the cylindrical upper portion. Document WO 2004/106162 discloses a container or vessel being made of plastic material intended to contain a product to be packaged, the laminar lid being fastened to an annular surface defined around a mouth of each vessel, wherein the vessel comprises a cylindrical upper portion with a non-constant cross section having a first diameter, and a spherical lower portion having a maximum second diameter greater than the first diameter of the cylindrical upper portion.

### Description of the invention

A pair of containers of this invention is manufactured by the system of claim 1 and comprises a pair of adjacent vessels joined together by a common laminar lid and a decorative perimeter banner on each vessel, each vessel being made of plastic material intended to contain a product to be packaged, the laminar lid being fastened to an annular surface defined around a mouth of each vessel, wherein the vessel comprises a cylindrical upper portion with a constant cross section having a first diameter shaping a fastening surface for the perimeter banner, and a spherical lower portion having a maximum second diameter greater than the first diameter of the cylindrical upper portion.

The vessel comprises a cylindrical upper portion with a constant cross section, shaping a fastening surface of the perimeter banner; and a spherical lower portion, with a maximum diameter greater than that of the cylindrical upper portion.

This container provides a number of advantages including:
- it allows demolding with a mold opening lesser than the gap between the containers formed during the process and proportional to the difference between the maximum diameter of the spherical lower portion and the diameter of the cylindrical upper portion.
- it allows working with a cut without wasting the sheet that forms the lid, which is equivalent to manufacturing the container with 30% less material than the current festoon systems and;
- it also allows working with standard systems of cutting and placing banners, and it does not require a banana-shaped banner cut with wastage;
- it allows manufacturing the containers in standard FFS (Form - Fill- Seal) machines and facilitates changing the size or the shape of the model while current manufacturing systems work exclusively with a single model and;
- the manufacture thereof is between 30% and 50% cheaper than containers manufactured with current systems.

The system for manufacturing the aforementioned pair of containers is defined in claim 1.

This system has suitable characteristics for working with a working mold made up of various rows of containers, equal to a standard 63x63 format mold, or any other FFS (Form, Fill, Seal) machine step; and working with standard non-working molds of different sizes and with standard devices for placing banners on the container, without wasting material be it plastic, paper or lid, making it possible to exchange one mold for another.

According to the invention, this system has a mold capable of rotating between a first inlet position of the banner or decorative paper and a second position for forming the vessels of the containers therein.

In a preferred embodiment said positions are 180° out of phase.

An essential characteristic of the invention is that the opening of the mold during the demolding of the containers is of a lesser range than the space that remains between two adjacent containers shaped therein; said opening range being less than the distance between adjacent vessels.

This system provides a number of advantages:
- There is no material wastage.
- It is installed on a standard FFS machine.
- It is automatically fully compatible and exchangeable with standard FFS machine molds.
- It enables manufacturing containers with different volumes and different banner lengths and widths.

### Description of the figures

As a complement to the description provided herein, and for the purpose of helping to make the characteristics of the invention more readily understandable, the present specification is accompanied by a set of figures which, by way of illustration and not limitation, represent the following:
Figures1, 2 and 3 show perspective, elevation and plan views of an exemplary embodiment of one of the container of the invention.
Figure 4 shows a schematic plan view of an exemplary embodiment of the system for manufacturing the container of the previous figures, in which the 180° rotation of the mold is schematically shown in order to change from the position for decorating to the position for forming the vessels of the containers.
Figures 5a - 5c schematically show the decorating area of the system for forming the vessel during the insertion of the banner, during loading of the banner and with the banner positioned within the mold, respectively.
Figures 6a- 6d schematically show the area for forming the vessels during the process of: forming the vessels, opening the mold, demolding the vessels and advancing the closing sheet thereof.

### Preferred embodiment of the invention

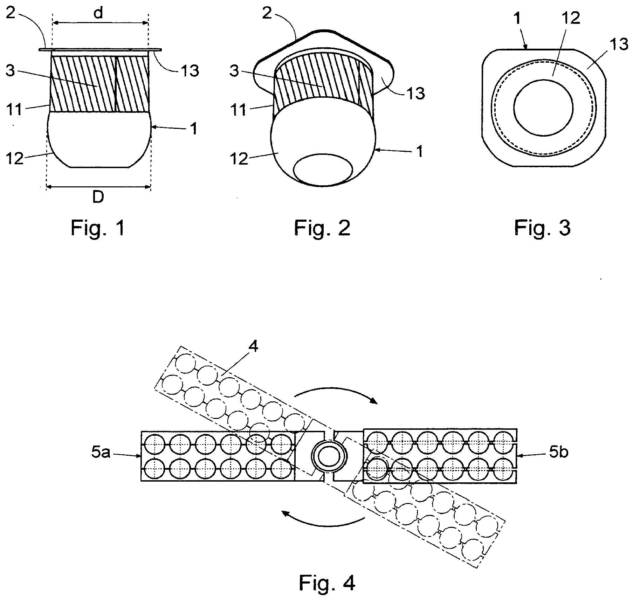

As can be seen in Figures 1 to 3, one of the containers comprises a vessel (1) made of plastic material, a laminar closing lid (2) made up of a plastic paper with a film and a perimeter banner (3).

The vessel (1) comprises: a cylindrical upper portion (11) with a constant cross section, shaping a fastening surface of a perimeter banner (3) having a rectangular shape; and a spherical lower portion (12), with a maximum diameter (D) greater than the diameter (d) of the cylindrical upper portion (11).

The cylindrical upper portion (11) tops out in a mouth that extends towards the outside of the vessel on a coplanar annular surface (13), on which a sheet forming the lid (2) is fastened.

The system for manufacturing the container, schematically shown in Figure 4, comprises a mold (4) capable of rotating between a decorating area (5a) in which banners (3) are inserted into the mold (4); and an area for creating (5b) the vessels (1) in this case 180° out of phase with respect to the decorating area (5a).

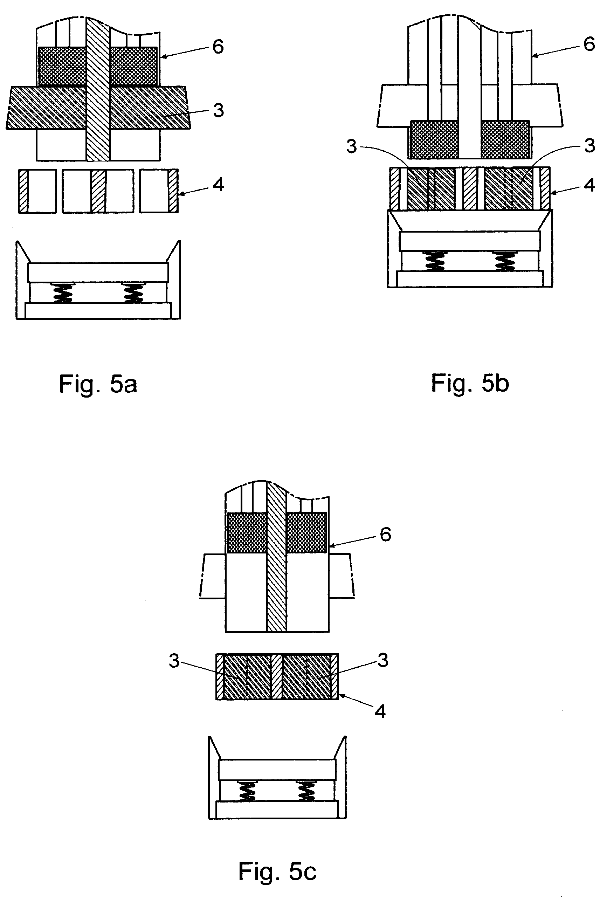

Figures 5a - 5c show schematically the simultaneous insertion of two banners (3) in two adjacent cavities of the mold (4) by a conventional-type banner insertion device (6).

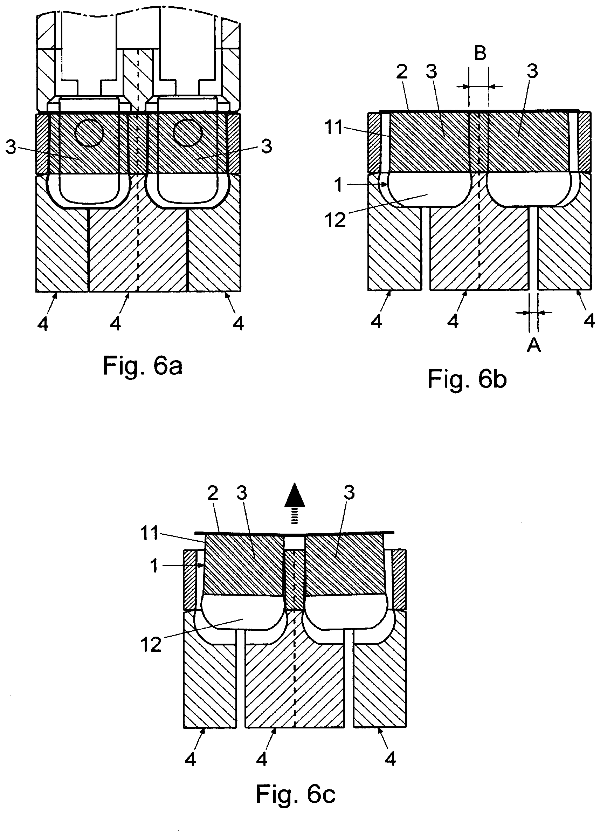

Once the banners (3) have been inserted into the mold (4), said mold (4) rotates to the forming area (5b) where the shaping of the vessels (1) is carried out in pairs therein, as shown in Figure 6a.

Thereafter, as shown in Figure 6b, a mold opening is carried out, of a range (A) lesser than the distance (B) between the two adjacent vessels (1), and substantially equal to the difference between the maximum diameter (D) of the spherical lower portion (12) and the diameter (d) of the cylindrical upper portion (11), this opening being sufficient to produce the demolding of the vessels (1) as shown in Figure 6c.

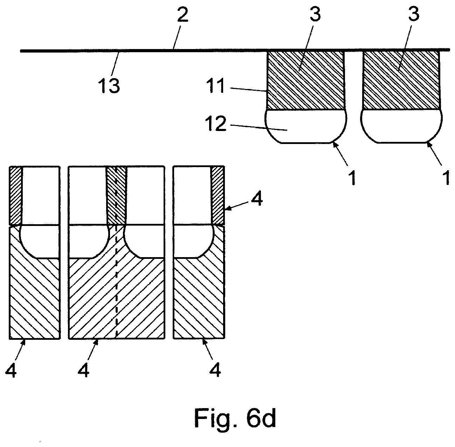

Figure 6d schematically shows the open mold (4) and the advancing of the sheet shaping the lid (2) once it is fastened to the vessels (1).

Having sufficiently described the nature of the invention, as well as an example of a preferred embodiment, it is hereby stated for the relevant purposes that the materials, shape, size and arrangement of the described elements may be modified, provided that it does not imply altering the essential characteristics of the invention claimed below.

## Claims

1. A system for manufacturing pairs of containers, each pair of containers comprising a pair of adjacent vessels (1) made of plastic material joined together by a common laminar lid (2) and with a decorative perimeter banner (3) on each vessel (1), each vessel (1) comprising a cylindrical upper portion (11) with a constant cross section having a first diameter (d) shaping a fastening surface for the perimeter banner (3), a spherical lower portion (12) having a maximum second diameter (D) greater than the first diameter (d), and an annular surface (13) defined around a mouth at the top of the cylindrical upper portion (11), the common laminar lid (2) being fastened to the annular surfaces (13) of the adjacent vessels (1), the system comprising a mold (4) for shaping pairs of adjacent vessels (1), a device (6) for inserting the banners (3) into the mold (4), and an area for forming (5b) vessels (1) inside the mold (4); the mold (4) comprising a mold central body defining two first half-molds for molding two contiguous halves of the adjacent vessels (1) and two mold side bodies defining two second half-molds for molding the other two opposed halves of the adjacent vessels (1), and an open position of the mold (4) for demolding the pair of containers the mold side bodies being separated from the mold central body at an opening range (A) lesser than a distance (8) between two adjacent vessels (1) and equal to the difference between the maximum second diameter (D) of the spherical lower portion (12) and the first diameter (d) of the cylindrical portion (11) of the vessel.

2. A pair of containers manufactured by the system of claim 1, the pair of containers comprising a pair of adjacent vessels (1) joined together by a common laminar lid (2) and a decorative perimeter banner (3) on each vessel (1), each vessel (1) being made of plastic material intended to contain a product to be packaged, the laminar lid (2) being fastened to an annular surface (13) defined around a mouth of each vessel (1), wherein the vessel (1) comprises a cylindrical upper portion (11) with a constant cross section having a first diameter (d) shaping a fastening surface for the perimeter banner (3), and a spherical lower portion (12) having a maximum second diameter (D) greater than the first diameter (d) of the cylindrical upper portion (11).

## Patentansprüche

1. System zum Herstellen von Behälterpaaren, wobei jedes Behälterpaar ein Paar benachbarter Gefäße (1) umfasst, das aus einem Kunststoffmaterial hergestellt ist, das durch einen Foliendeckel (2) zusammengefügt ist und mit einem dekorativen Umfangsbanner (3) an jedem Gefäß (1), wobei jedes Gefäß (1) einen zylindrischen oberen Abschnitt (11) mit einem konstanten Querschnitt umfasst, der einen ersten Durchmesser (d) aufweist, der eine Befestigungsoberfläche für den Umfangsbanner (3) formt, einen kugelförmigen unteren Abschnitt (12) mit einem maximalen zweiten Durchmesser (D), der größer als der erste Durchmesser (d) ist, und eine ringförmige Oberfläche (13), die um einen Mund an der Oberseite des zylindrischen oberen Abschnitts (11) definiert ist, wobei der gemeinsame Foliendeckel (2) an den ringförmigen Oberflächen (13) benachbarter Gefäße (1) befestigt ist, wobei das System eine Form (4) zum Formen von Paaren von benachbarten Gefäßen (1), eine Vorrichtung (6) zum Einsetzen der Banner (3) in die Form (4) und einen Bereich zum Bilden (5b) von Gefäßem (1) innerhalb der Form (4) umfasst; wobei die Form (4) einen Formmittelkörper umfasst, der zwei erste Halbformen zum Formen von zwei zusammenhängenden Hälften der benachbarten Gefäße (1) definiert, und zwei Formseitenkörper, die zwei zweite Halbformen zum Formen der anderen zwei gegenüberliegenden Hälften der benachbarten Gefäße (1) definieren und eine offene Position der Form (4) zum Entformen des Behälterpaares, wobei die Formseitenkörper vom Formmittelkörper in einem Öffnungsbereich (A) getrennt sind, der kleiner als ein Abstand (8) zwischen zwei benachbarten Gefäßen (1) ist und gleich der Differenz zwischen dem maximalen zweiten Durchmesser (D) des kugelförmigen unteren Abschnitts (12) und dem ersten Durchmesser (d) des zylindrischen Abschnitts (11) des Gefäßes.

2. Behälterpaar, das durch das System nach Anspruch 1 hergestellt wird, wobei das Behälterpaar ein Paar benachbarter Gefäße (1) umfasst, das durch einen Foliendeckel (2) zusammengefügt ist und mit einem dekorativen Umfangsbanner (3) an jedem Gefäß (1), wobei jedes Gefäß (1) aus Kunststoffmaterial hergestellt ist, um ein zu verpackendes Produkt zu enthalten, wobei der Foliendeckel (2) an einer ringförmigen Oberfläche (13) befestigt ist, die um einen Mund jedes Gefäßes (1) definiert ist, wobei das Gefäß (1) einen zylindrischen oberen Abschnitt (11) mit einem konstanten Querschnitt mit einem ersten Durchmesser (d), der eine Befestigungsoberfläche für den Umfangsbanner (3) formt, und einen kugelförmigen unteren Abschnitt (12) mit einer maximalen zweiten Durchmesser (D) umfasst, der größer als der erste Durchmesser (d) des zylindrischen oberen Abschnitts (11) ist.

## Revendications

1. Système de fabrication de paires de conteneurs, chaque paire de conteneurs comprenant une paire de récipients adjacents (1) en matière plastique joints ensemble par un couvercle laminaire commun (2) et avec une bannière périphérique décorative (3) sur chaque récipient (1), chaque récipient (1) comprenant une partie supérieure cylindrique (11) avec une section transversale constante ayant un premier diamètre (d) formant une surface de fixation pour la bannière périphérique (3), une partie inférieure sphérique (12) ayant un deuxième diamètre maximum (D) supérieur au premier diamètre (d), et une surface annulaire (13) définie autour d'une embouchure au sommet de la partie supérieure cylindrique (11), le couvercle laminaire commun (2) étant fixé aux surfaces annulaires (13) des récipients adjacents (1), le système comprenant un moule (4) pour former des paires de récipients adjacents (1), un dispositif (6) pour insérer les bannières (3) dans le moule (4), et une zone pour former (5b) des récipients (1) à l'intérieur du moule (4) ; le moule (4) comprenant un corps central de moule définissant deux premiers demi-moules pour mouler deux moitiés contiguës des récipients adjacents (1) et deux corps latéraux de moule définissant deux deuxièmes demi-moules pour mouler les deux autres moitiés opposées des récipients adjacents (1), et une position ouverte du moule (4) pour démouler la paire de conteneurs, les corps latéraux de moule étant séparés du corps central de moule à une plage d'ouverture (A) inférieure à une distance (8) entre deux récipients adjacents (1) et égale à la différence entre le deuxième diamètre maximum (D) de la partie inférieure sphérique (12) et le premier diamètre (d) de la partie cylindrique (11) du récipient,

2. Paire de conteneurs fabriqués par le système selon la revendication 1, la paire de conteneurs comprenant une paire de récipients adjacents (1) joints entre eux par un couvercle laminaire commun (2) et une bannière périphérique décorative (3) sur chaque récipient (1), chaque récipient (1) étant en matière plastique destiné à contenir un produit à conditionner, le couvercle laminaire (2) étant fixé à une surface annulaire (13) définie autour d'une embouchure de chaque récipient (1), dans lequel le récipient (1) comprend une partie supérieure cylindrique (11) avec une section transversale constante ayant un premier diamètre (d) formant une surface de fixation pour la bannière périphérique (3), et une partie inférieure sphérique (12) ayant un deuxième diamètre maximum (D) supérieur au premier diamètre (d) de la partie supérieure cylindrique (11),
